# EUROPÄISCHE PATENTANMELDUNG

(11) **EP 1 063 834 A2**
(43) Veröffentlichungstag der Anmeldung: **27.12.2000**
(21) Anmeldenummer: 00111514.6
(22) Anmeldetag: 29.05.2000
(51) Int. Cl.: H04M 1/247, H04M 3/42

(54) **Verfahren zum Betrieb eines Endgerätes**

(30) Priorität: 23.06.1999 DE 19928778
(71) Anmelder: SIEMENS AKTIENGESELLSCHAFT, 80333 München (DE)
(72) Erfinder: Gundlach, Michael, Dr., 81739 München (DE)

(57) **Zusammenfassung**

Verfahren zum Betrieb eines Endgerätes an einem intelligenten Netz (IN), bei dem die Softwareausrüstung des Endgeräts betreffende Daten über einen Dienstvermittlungsknoten (SSP) an einen Dienststeuerungsknoten (SCP) übermittelt werden, ein Vergleich der die Softwareausrüstung des Endgeräts betreffenden Daten mit in einer Applikationssoftware-Datenbasis (SDP) gespeicherten Daten ausgeführt wird und bei Nichtübereinstimmung zusätzliche Software durch die intelligente Peripherie (IP) zum Endgerät heruntergeladen wird.

## Beschreibung

Die Erfindung betrifft ein Verfahren zum Betrieb eines Endgerätes an einem intelligenten Netz.

Die Etablierung neuer Dienste in einem Telekommunikationsnetz hat in der Vergangenheit die Aktualisierung der Steuerprogramme in jeder Vermittlungsstelle erfordert, was jeweils mit einem sehr hohen Kostenaufwand sowie mit gewissen Risiken hinsichtlich der Betriebsicherheit des Netzes verbunden war. Diese Probleme wurden um so gewichtiger, je enger die Verknüpfung zwischen Telekommunikations- und Datentechnik wurde und je kürzer die sich daraus ergebenden Innovationszyklen in der Telekommunikation wurden.

Um daher neue Dienste schnell und flexibel einführen und handhaben zu können, wurde das Konzept des intelligenten Netzes (IN = Intelligent Network) entwickelt, was im Grunde eine neuartige Architektur zur Weiterentwicklung bestehender und zur Neuentwicklung zukünftiger Netze darstellt. Bei einem IN werden bestimmte, über die Vermittlungs- und Übertragungsfunktionen hinausgehende Leistungen in separaten Netzknoten zusammengefaßt. Neue Dienste können auf dieser Grundlage zentral erbracht werden, statt - wie früher - in jedem Vermittlungsknoten realisiert werden zu müssen. Dies ermöglicht eine erheblich beschleunigte Einführung dieser Dienste im gesamten Netz und trägt bereits heute dazu bei, daß sich das Angebot neuer Dienste - insbesondere in den Mobilfunknetzen, aber auch im Festnetz - immer schneller erweitert.

Mit dieser Entwicklung hält die Endgeräteentwicklung zunehmend weniger Schritt. Obgleich ständig Endgeräte (Mobiltelefone, Festnetztelefone, Faxgeräte etc.) mit weiterentwickelter Hard- und Software auf den Markt kommen, sind diese vielfach schon nach kurzer Zeit dem sich entwickelnden Dienstangebot nicht mehr in vollem Umfang gewachsen, so daß auf einen Teil der netzseitig gebotenen Leistungen bei neu angeschafften Geräten mitunter schon nach kurzer Zeit nicht oder jedenfalls nicht in der vollen Funktionalität zugegriffen werden kann.

Zudem sind heutige Endgeräte der Vielfalt der netzseitig angebotenen Dienste auch hinsichtlich der Authentisierungsmöglichkeiten für den Teilnehmer nur bedingt gewachsen. Wenn überhaupt, bieten diese Endgeräte allenfalls einen einzigen Mechanismus zur Authentifizierung des Endgeräts oder des Benutzers und zur Verschlüsselung übertragener Daten.

Der Erfindung liegt daher die Aufgabe zugrunde, ein verbessertes Verfahren zum Betrieb eines Endgerätes anzugeben, das eine wesentlich erhöhte Flexibilität für die komfortable Nutzung neuer Dienste - insbesondere auch hinsichtlich der erforderlichen Authentifizierung - bietet.

Diese Aufgabe wird durch ein Verfahren mit den Merkmalen des Anspruchs 1 gelöst.

Die Erfindung schließt den wesentlichen Gedanken ein, die für den jeweiligen Dienst im intelligenten Netz benötigte Software von der intelligenten Peripherie (IP = Intelligent Peripheral) des IN zum Endgerät herunterzuladen, sofern sie dort nicht verfügbar ist.

Gemäß einem weiteren Aspekt schließt die Erfindung den Gedanken ein, auf der Grundlage einer angemessenen hardwareseitigen Vorbereitung auch die für den Einsatz spezifischer Authentisierungsmittel benötigte Software im Bedarfsfall netzseitig - nämlich veranlaßt durch den Dienststeuerknoten (SCP = Service Control Point) - zum Endgerät zu übertragen. Diese Übertragung kann beispielsweise Applikationen betreffen, die für Chipkarten bzw. SmartCards spezifisch sind. In diesem Sinne kann im Rahmen der Erfindung beispielsweise eine zweistufige Authentifikation erfolgen, bei der in einem ersten Schritt mit den vorab verfügbaren Authentisierungsmitteln - beispielsweise einem auf einer Chipkarte abgelegten Code, zu dessen Verarbeitung die im Endgerät vorhandene Software ausgelegt ist - zunächst der Zugang zum Netz und speziell zum Dienststeuerknoten zum Herunterladen von Software aus der intelligenten Peripherie ermöglicht wird, während die Inanspruchnahme eines speziellen Dienstes erst möglich wird, nachdem eine erweiterte Software geladen wurde und unter deren Nutzung ein weiterer Code, der auf der Chipkarte bereits vorhanden ist, durchgegeben werden kann.

Eine besondere Rolle kommt bei der vorgeschlagenen Lösung dem Anwendungsprotokoll intelligenter Netze (INAP = Intelligent Network Application Protocol), welches als Client-Server-System verstanden werden kann und insbesondere ein Zusammenwirken zwischen der Dienstvermittlungsfunktion und der Dienststeuerfunktion, d.h. die Informationsübertragung zwischen dem dem jeweiligen Endgerät zugeordneten Dienstvermittlungsknoten (SSP = Service Switching Point) und dem Dienststeuerknoten (SCP = Service Control Point) des Netzes realisiert. Im Rahmen der vorgeschlagenen Lösung erfolgt über das INAP insbesondere die Informationsübermittlung zwischen SSP und SCP über einen durch Eingabe einer speziellen IN-Nummer angeforderten Dienst auf der einen Seite und die Übermittlung der Information, ob das Endgerät die für den angeforderten Dienst benötigte bzw. aktuellste Applikation und/oder die für eine bestimmte Authentisierung erforderliche Software besitzt oder nicht. Weiterhin wird über das INAP seitens des SCP an den SSP ein Signal übermittelt, welches das Erfordernis der Bereitstellung aktuellerer bzw. zusätzlicher Software für das Endgerät kennzeichnet.

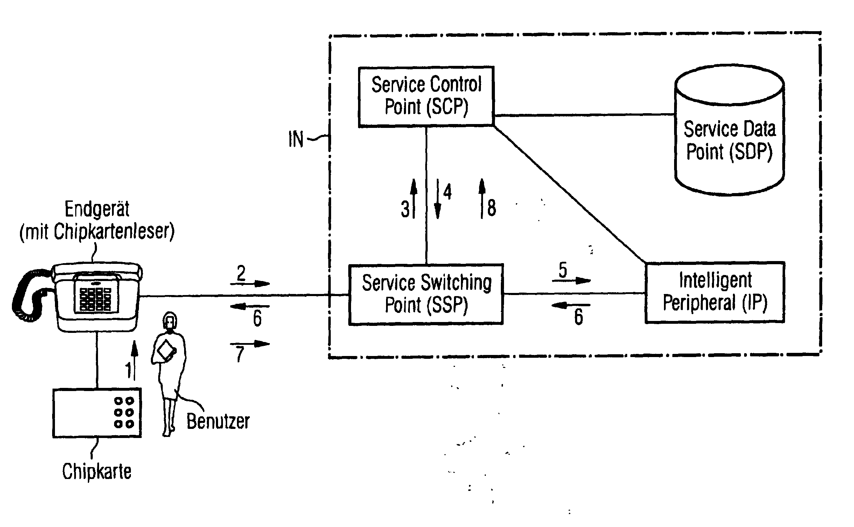

Vorteile und Zweckmäßigkeiten der Erfindung ergeben sich im übrigen aus den Unteransprüchen sowie der nachfolgenden Beschreibung eines bevorzugten Ausführungsbeispiels anhand der Figur.

In der Figur ist schematisch der Ablauf eines Software-Download auf ein Endgerät in einem intelligenten Netz dargestellt. In der Figur sind die für die Ausführung der Erfindung wesentlichen Komponenten eines intelligenten Netzes IN dargestellt, nämlich neben dem Endgerät (mit Chipkartenleser) der Dienstvermittlungsknoten SSP, der Dienststeuerungsknoten SCP, die intelligente Peripherie IP und eine Applikationssoftware-Datenbank SDP. Der Benutzer verfügt über eine Chipkarte, auf deren Grundlage er über das Endgerät einen bestimmten Dienst abrufen will.

In einem Schritt 1 wählt der Benutzer eine gewünschte, den benötigten Dienst spezifizierende IN-Nummer. Im vorliegenden Beispiel führt er hierbei eine Chipkarte in den Chipkartenleser des Endgeräts ein. In einem Schritt 2 baut das Endgerät eine Verbindung zum zugeordneten SSP auf. Es sei angenommen, daß der Benutzer über eine Chipkarte verfügt, für die im Endgerät eine spezifische Applikation nicht verfügbar ist. Dies wird beim Einlesen der Chipkarte durch den Chipartenleser festgestellt. In einem Schritt 3 wird seitens des SSP mittels INAP an den SCP eine Information über den angeforderten Dienst übermittelt, die sich aufgrund der gewählten IN-Nummer ergibt. Zugleich wird durch den SSP an den SCP eine spezifische Information hinsichtlich der im Endgerät verfügbaren Softwarebasis für den angeforderten Dienst bzw. die chipkartenspezifischen Applikationen übermittelt. In der Regel werden zur Übermittlung der Gesamtinformation hinsichtlich der Dienstspezifik und der Software-Ausrüstung des Endgerätes mehrere Kommunikationsschritte in der Kette Endgerät - SSP - SCP - IP erforderlich sein.

Nachdem auf diese Weise im intelligenten Netz die im Hinblick auf den angeforderten Dienst benötigten Informationen über die Softwareausstattung des Endgerätes verfügbar sind, erfolgt ein Vergleich der entsprechenden, seitens des Endgerätes übermittelten Daten mit den in der Applikationssoftware-Datenbasis SDP gespeicherten Daten, die die aktuellste im IN verfügbare Software für den angeforderten Dienst spezifizieren. Dieser Vergleich wird im Bereich des ausgeführt. Nach Ausführung des Vergleiches wird seitens des SCP in dem Fall, daß das Vergleichsergebnis negativ ist, also die Softwareausstattung des Endgerätes nicht dem aktuellsten Stand für den angeforderten Dienst entspricht bzw. dessen Inanspruchnahme grundsätzlich nicht ermöglicht, in einem Schritt 4 mittels des INAP ein Steuersignal an den SSP übermittelt, welches das Vergleichsergebnis repräsentiert. Dieses Steuersignal wird an die IP weitergeleitet (Schritt 5), wo es die speziell benötigte Software spezifiziert und deren Herunterladen zum Endgerät über den zugeordneten SSP triggert (Schritt 6). Diese Software wird entweder bei Bedarf von der SDP über den SCP zur IP heruntergeladen, oder sie ist dort bereits - als gespiegelte Datenbasis - vorhanden. Nach Beendigung des Herunterladens der Software für die chipkartenspezifische Applikation und die Nutzung des angeforderten Dienstes wird in einem Schritt 7 ein Bereitschaftssignal an den SSP und in einem Schritt 8 weiter an den SCP übermittelt, welcher die Bereitstellung des Dienstes erlaubt.

Sofern es sich bei der chipkartenspezifischen Applikation um eine zusätzliche Authentisierungsmöglichkeit handelt, sind entsprechende zusätzliche Schritte - die in der Figur der Übersichtlichkeit halber weggelassen wurden - erforderlich, die die (zusätzliche) Authentisierung für den angeforderten Dienst auf der Grundlage der neu heruntergeladenen Software realisieren.

Die Ausführung der Erfindung ist nicht auf das beschriebene Beispiel beschränkt, sondern ebenso in einer Vielzahl von Abwandlungen möglich, deren Realisierung im Rahmen fachmännischen Handelns liegt.

So ist insbesondere eine Authentisierung auch mit anderen Mitteln als mit einer Chipkarte möglich, etwa in an sich bekannter Weise durch Eingabe einer PIN oder (falls das Endgerät über die Möglichkeit einer alphanumerischen Eingabe verfügt) eines Passworts oder auch (wiederum entsprechende Hardware-Ausstattung des Endgeräts vorausgesetzt) durch Eingabe biometrischer Daten, etwa eines Fingerabdrucks. Es liegt dabei im Rahmen der Erfindung, spezifische Kombinationen von Authentisierungsmitteln nach einer Primär-Authentisierung erst auf der Basis von aus dem Netz heruntergeladener Software zu realisieren.

Ebenso liegt es im Rahmen der Erfindung, neuartige Zusatzleistungen auf der Basis eines bereits seit längerem etablierten Dienstes durch das Herunterladen zusätzlicher, spezifischer Software zu ermöglichen, nachdem der Zugang zu dem Basisdienst aufgrund der im Endgerät realisierten Software ermöglicht wurde.

## Patentansprüche

1. Verfahren zum Betrieb eines Endgerätes an einem intelligenten Netz (IN), mit den Schritten
- Eingabe einer IN-Nummer am Endgerät,
- Aufbau einer Verbindung zum zugeordneten Dienstvermittlungsknoten (SSP) des intelligenten Netzes,
- selbsttätige Übermittlung von den angeforderten Dienst sowie die Softwareausrüstung des Endgerätes betreffenden Daten über den Dienstvermittlungsknoten an einen Dienststeuerungsknoten (SCP) des intelligenten Netzes mittels des Anwendungsprotokolls intelligenter Netze (INAP),
- Vergleich der die aktuelle Softwareausrüstung des Endgeräts betreffenden Daten mit in einer Applikationssoftware-Datenbasis (SDP) gespeicherten Daten zur aktuellsten im intelligenten Netz verfügbaren Software für den angeforderten Dienst beim Dienststeuerungsknoten,
- Übermittlung eines Steuersignals über den Dienstvermittlungsknoten des Endgeräts an die intelligente Peripherie (IP), falls im Ergebnis des Vergleiches Nichtübereinstimmung festgestellt wird, und
- Laden der aktuellsten Software auf das Endgerät durch die intelligente Peripherie über den Dienstvermittlungsknoten.

2. Verfahren nach Anspruch 1,
**dadurch gekennzeichnet,** daß die Softwareausrüstung des Endgeräts und die geladene aktuellste Software eine Authentisierungs-Software umfaßt.

3. Verfahren nach Anspruch 1 oder 2,
**dadurch gekennzeichnet,** daß die Softwareausrüstung des Endgeräts und die geladene aktuellste Software eine Software zur Realisierung eines Dienstes des intelligenten Netzes aufweist.

4. Verfahren nach einem der vorangehenden Ansprüche,
**dadurch gekennzeichnet,** daß der Schritt der Übermittlung der den angeforderten Dienst sowie die Softwareausrüstung des Endgeräts betreffenden Daten mehrere Teilschritte einer wechselseitigen Datenübertragung zwischen Dienstvermittlungsknoten (SSP), Dienststeuerungsknoten (SCP) und intelligenter Peripherie (IP) aufweist.

5. Verfahren nach einem der vorangehenden Ansprüche,
**dadurch gekennzeichnet,** daß das im Ergebnis des Vergleichs übermittelte Steuersignal ein Adreßsignal für einen ausgewählten Speicherbereich der Applikationssoftware-Datenbasis (SDP) umfaßt.
